# EUROPÄISCHE PATENTSCHRIFT

(11) **EP 1 106 448 B1**
(45) Veröffentlichungstag und Bekanntmachung des Hinweises auf die Patenterteilung: **01.03.2006**
(21) Anmeldenummer: 00124266.8
(22) Anmeldetag: 13.11.2000
(51) Int. Cl.: B60R 21/34

(54) **Fahrzeugseitenblech mit aufprallweicher Aussenkante**
Vehicle lateral steel sheet with an outer edge deformable under impact
Tôle latérale de véhicule à bord externe déformable en cas d'impact

(30) Priorität: 10.12.1999 DE 19959606
(43) Veröffentlichungstag der Anmeldung: 13.06.2001
(73) Patentinhaber: Volkswagen Aktiengesellschaft, 38436 Wolfsburg (DE)
(72) Erfinder: Morsch, Klaus-Dieter, 38124 Braunschweig (DE)

(56) Entgegenhaltungen:
- DE-A- 3 047 969
- JP-A- 11 222 154

## Beschreibung

Die Erfindung bezieht sich auf ein Fahrzeugseitenblech mit aufprallweicher Außenkante, umfassend einen außenliegenden Verkleidungsabschnitt für eine Fahrzeugkarosserie und einen entlang einer Außenkante an diesen angeformten, nach innen umgebogenen Befestigungsabschnitt, der einen an die Außenkante unmittelbar anschließenden Deformationsbereich mit zwei im wesentlichen parallel zu der Außenkante verlaufenden, entgegengesetzt zueinander gebogenen Längssicken aufweist, sowie mehrere, gegenüber dem Deformationsbereich abgewinkelte Befestigungslappen zur Ankopplung des Seitenbleches an die Fahrzeugkarosserie.

Derartige Seitenbleche werden beispielsweise als Kotflügel bei Kraftfahrzeugen eingesetzt, um bei einem Zusammenprall des Kraftfahrzeuges mit einer Person die Verletzungsgefahr zu vermindern.

Bei einem Zusammenprall mit einem Fußgänger wird dieser in einer ersten Phase meist durch die Stoßstange des Fahrzeuges erfaßt und in einer zweiten Phase auf die Fronthaube des Fahrzeuges geschleudert, wobei der Aufprall dann zuerst mit dem Kopf oder dem Oberkörper erfolgt. Der Aufprall auf die breitflächige Fronthaube ist hierbei weniger kritisch. Die größten Risiken für die Verletzungsgefahr resultieren vielmehr aus den verhältnismäßig starren Seitenkanten der Fronthaube sowie insbesondere den Außenkanten der Kotflügel. Gerade die Außenkanten der Kotflügel weisen eine besonders hohe Steifigkeit auf, da das entsprechende Seitenblech im Bereich der Außenkante nach innen umgebogen ist, um sich mit einem Befestigungsabschnitt gegen die Fahrzeugkarosserie abzustützen. Allein aus der Umbiegung ergibt sich bereits eine deutliche Steifigkeitszunahme, die durch den zumeist im wesentlichen vertikal ausgebildeten Befestigungsabschnitt weiter verstärkt wird. Tritt der Aufprall im Bereich der Außenkante auf, so ist die Verletzungsgefahr bzw. die Schwere der Verletzungen besonders hoch.

Aus diesem Grunde wird versucht, die strukturelle Steifigkeit der Außenkanten zu vermindern. Dabei ist jedoch zu beachten, daß für die Seitenbleche eine die Integrität des Fahrzeugaufbaus nicht gefährdende Festigkeit der Verbindung zu der Karosserie erhalten bleiben muß, die zudem eine vibrationsfreie Anbindung sicherstellt.

Aus der DE 30 47 969 A1 ist hierzu ein Fahrzeugseitenblech der eingangs genannten Art bekannt, das als Kotflügel an einer Fahrzeugkarosserie befestigt ist. Bei dem bekannten Fahrzeugseitenblech schließt an die Außenkante ein nach unten, d.h. in bezug auf die Fahrzeugkarosserie zum Fahrzeugboden hin abgewinkelter Befestigungsabschnitt an, der an die Außenkante unmittelbar angrenzend einen Deformationsbereich in Form von zwei entgegengesetzt zueinander gebogenen Längssicken aufweist, welche sich ununterbrochen entlang der Außenkante erstrecken. An den Deformationsbereich schließen mehrere, voneinander beabstandete, profilierte Befestigungslappen an, über die die Anbindung an einen vertikalen Karosserieabschnitt erfolgt. Letzterer ist hierzu mit einer sich seitlich nach außen in den Kotflügel hinein erstreckenden Vertiefung versehen, in die die jeweiligen Befestigungslappen im wesentlichen konturkonform eingreifen. Die Befestigung erfolgt dabei über Schrauben, die im wesentlichen horizontal verlaufen.

Diese bekannte Befestigungsanordnung weist immer noch eine verhältnismäßig hohe Steifigkeit im Bereich der Außenkante des Seitenbleches auf. Zudem ergibt sich für die Befestigung des Seitenbleches eine große Bauhöhe.

Der Erfindung liegt demgegenüber die Aufgabe zugrunde, die Verletzungsgefahr bzw. die Schwere der Verletzungen bei einem Personenaufprall eines Kraftfahrzeuges zu vermindern.

Diese Aufgabe wird durch ein Fahrzeugseitenblech der eingangs genannten Art gelöst, bei dem zwischen den Befestigungslappen gebildete Ausnehmungen sich jeweils bis in den Deformationsbereich erstrecken und die Längssicken unterbrechen.

Hierdurch ergibt sich gegenüber dem Stand der Technik ein bereits bei kleineren Aufprallkräften wirksames, höheres Verformungspotential und damit eine Verringerung der Verletzungsgefahr.

In einer vorteilhaften Ausgestaltung der Erfindung ist jeder Befestigungslappen als sich in bezug auf die Fahrzeugkarosserie im wesentlichen horizontal erstreckender, flacher Befestigungsabschnitt zur Anlage gegen die Fahrzeugkarosserie ausgebildet, der an den Deformationsbereich anschließt. Damit läßt sich für die Befestigungsanordnung eine besonders geringe Bauhöhe verwirklichen, ohne daß hierdurch das hohe Verformungspotential beeinträchtigt würde. Vielmehr erlaubt die horizontale Ausrichtung des Befestigungsabschnittes eine Unterstützung des Verformungsvermögens, da insbesondere bei einem Aufprall von oben auf die Außenkante ein gutes Ausweichverhalten des Seitenbleches nach außen ermöglicht wird. Zudem wird eine Behinderung der Verformung durch die Karosserie vermieden. Die horizontale Anordnung erlaubt überdies eine einfache Montage an der Fahrzeugkarosserie, da die Befestigung von oben einfach erfolgen kann, beispielsweise mittels Schraubbolzen oder gegebenenfalls auch durch Anschweißen.

Zur weiteren Erhöhung des Verformungspotentials umfaßt der Deformationsbereich weiterhin eine dritte Längssicke, die zwischen den Befestigungslappen einerseits und den ersten beiden Längssicken andererseits angeordnet ist. Damit kann das Ausweichen des Seitenbleches nach außen weiter verbessert werden. Bei geringen Aufprallkräften bewegt sich dann die Verformung noch im elastischen Bereich, so daß bei kleineren Unfällen an dem Seitenbleche keine bleibenden Verformungen auftreten.

Vorzugsweise ist die dritte Längssicke entsprechend der ersten, der Außenkante am nächsten liegenden Längssicke, gebogen. Hieraus resultiert eine einerseits besonders flache, andererseits hochverformungsfähige Befestigungsanordnung, mit der überdies der Umformgrad an dem Befestigungsabschnitt des Seitenbleches im Übergangsbereich zwischen den Deformationsbereichen und den Befestigungslappen gering gehalten werden kann.

Zur Vereinfachung der Herstellung des Seitenbleches sind in einer weiteren, bevorzugten Ausgestaltung der Erfindung ein Blechabschnitt zwischen der ersten und zweiten Längssicke und ein Blechabschnitt zwischen der dritten Längssicke und der Abwinkelung eines Befestigungslappens im wesentlichen parallel zueinander angeordnet und in bezug auf die Fahrzeugkarosserie gegenüber einer Vertikalen derart geneigt, daß die Profilweite des Seitenbleches zwischen dem Verkleidungsabschnitt und dem Befestigungsabschnitt von der Außenkante ausgehend betrachtet zunimmt. Insbesondere lassen sich hierdurch Hinterschneidungen an dem Seitenblech vermeiden.

In einer weiteren, vorteilhaften Ausgestaltung sind die Ausnehmungen bogenförmig ausgebildet, wobei sich die Scheitel der bogenförmigen Ausnehmungen bis kurz oberhalb derjenigen Längssicke erstrecken, die der Außenkante an nächsten liegt. Mit den kurz oberhalb der Längssicken endenden bogenförmigen Ausnehmungen wird eine Unterbrechung der Längssicken und damit eine hier erwünschte Schwächung der Steifigkeit Hinblick auf ein Nachaußenweichen des Seitenbleches erzielt. Andererseits soll das Seitenblech sich nicht bereits verformen, wenn sich eine Person gegen dieses lehnt oder darauf setzt. Durch die bogenförmige Ausbildung wird in einem solchen Fall das Auftreten von Spannungsspitzen vermieden, das ansonsten zu einem unerwünschten Einknicken führen könnte.

Zur Vermeidung von Verletzungen bei späteren Montagearbeiten ist entlang des Befestigungsabschnittes eine Abdeckleiste vorgesehen ist, welche an den Befestigungslappen festgelegt ist und die Ausnehmungen abdeckt.

Vorzugsweise weist die Abdeckleiste eine Dichtlippe auf, die oberhalb der Scheitel der Ausnehmungen elastisch gegen den Blechabschnitt zwischen der Außenkante und der ersten Längssicke anliegt. Damit wird verhindert, daß Wasser über die Ausnehmungen in das Fahrzeug eindringen kann.

Die obengenannte Aufgabe wird weiterhin durch ein Fahrzeug gelöst, dessen vordere Kotflügel als Seitenbleche nach einer der vorgenannten Ausgestaltungsformen ausgebildet sind. Hiermit ergeben sich die bereits im Zusammenhang mit dem Fahrzeugseitenblech erläuterten Vorteile.

Die Erfindung wird nachfolgend anhand eines in der Zeichnung dargestellten Ausführungsbeispieles näher erläutert. Die Zeichnung zeigt in
- Figur 1: ein Fahrzeugseitenblech in Form eines linken, vorderen Kotflügels eines Kraftfahrzeuges in räumlicher Darstellung,
- Figur 2: eine vergrößerte Darstellung der Außenkante und des Befestigungsabschnittes des Fahrzeugseitenbleches von Figur 1,
- Figur 3: einen Schnitt durch die Außenkante und den Befestigungsabschnitt im Bereich eines Befestigungslappens, und in
- Figur 4: einen Schnitt entsprechend Figur 3, bei dem zusätzlich eine Abdeckleiste mit dargestellt ist.

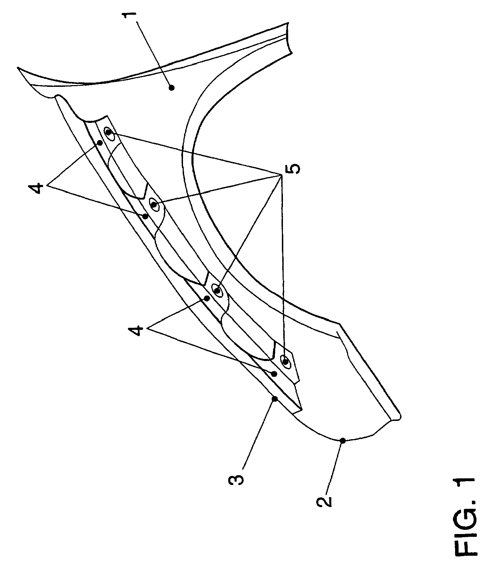

Das Ausführungsbeispiel zeigt ein Fahrzeugseitenblech 1 in Form eines vorderen linken Kotflügels eines Personenwagens. Wie aus Figur 1 zu erkennen ist, weist das Fahrzeugseitenblech 1 einen außenliegenden Verkleidungsabschnitt 2 auf, der einen Teil der Außenhaut eines Fahrzeuges bildet. Der Verkleidungsabschnitt 2 ist zum Inneren der Fahrzeugkarosserie hin umgebogen, wobei die Scheitellinie der Umbiegung eine Außenkante 3 dargestellt. An die Außenkante 3 schließt einstückig ein Befestigungsabschnitt an, über den das Seitenblech 1 an einem Abschnitt 13 der Fahrzeugkarosserie befestigt ist. Die Befestigung an dem Fahrzeugkarosserieabschnitt 13 erfolgt über mehrere, an dem Befestigungsabschnitt ausgebildete Befestigungslappen 5. Zwischen den einzelnen Befestigungslappen 5 und der Außenkante 3 ist jeweils ein Deformationsbereich 4 vorgesehen, der sich bei einem Aufprall einer Person verformt, so daß insgesamt eine aufprallweiche Außenkante 3 gebildet wird.

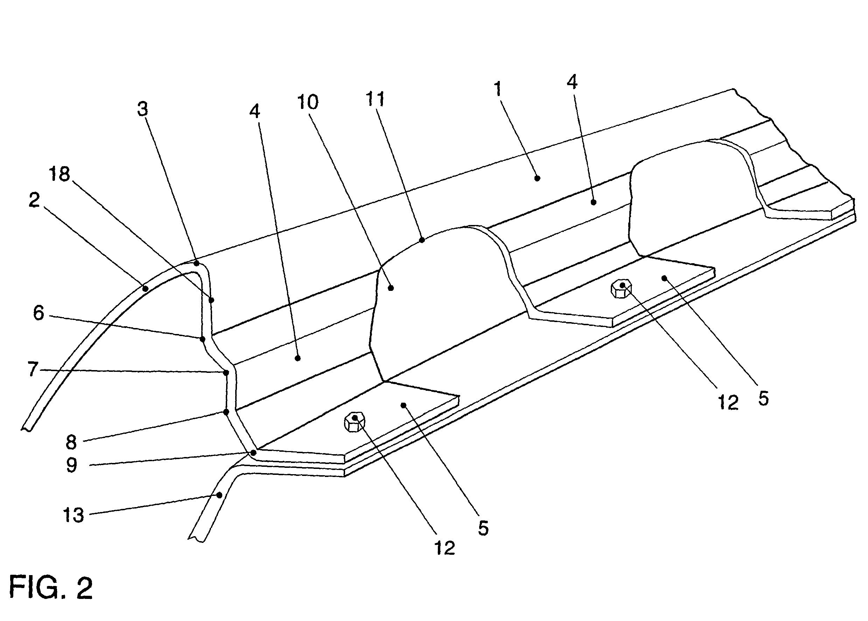

Die Befestigungslappen 5 sind, wie insbesondere aus Figur 2 zu erkennen ist, jeweils als sich im wesentlichen horizontal erstreckende, flache Blechabschnitte ausgebildet, die auf einem horizontalen Trägerabschnitt 13 der Fahrzeugkarosserie aufstehen. Die Verbindung mit dem Trägerabschnitt 13 erfolgt in dem dargestellten Ausführungsbeispiel durch Befestigungsbolzen 12, die von oben durch entsprechend an den Befestigungslappen 5 vorgesehene Durchgangsöffnungen eingesetzt und mit dem Trägerabschnitt 13 der Karosserie verspannt sind. Gegebenenfalls wird hierzu der Trägerabschnitt 13 mit Schweißmuttem verstärkt. Anstelle der Bolzenverbindung können auch andere, zum Zusammenfügen von Blechen bekannte Befestigungsmittel verwendet werden. Es ist auch möglich, die Befestigungslappen 5 mit dem Trägerabschnitt 13 zu verschweißen.

Die Deformationsbereiche 4 weisen miteinander fluchtende Längssicken auf, die im wesentlichen parallel zu der Außenkante 3 verlaufen. Ein erster Blechabschnitt 18 erstreckt sich von der nach innen umgebogenen Außenkante 3 bis zu einer ersten Längssicke 6 im wesentlichen senkrecht nach unten. Die Biegung der ersten Längssicke 6 ist derjenigen der Außenkante 3 entgegengerichtet, so daß an den ersten Blechabschnitt ein zweiter, nach unten zur Fahrzeuglängsmittelachse hin geneigter Blechabschnitt gebildet wird, der sich bis zu einer zweiten Längssicke 7 erstreckt. Deren Biegung ist derjenigen der ersten Längssicke 6 entgegengerichtet, so daß der nach unten an die Längssicke 7 anschließende Blechabschnitt wieder steiler verläuft, bis eine dritte Längssicke 8 erreicht wird. Deren Biegung erfolgt in die gleiche Richtung, wie diejenige an der ersten Längssicke 6. Der nach unten an die Längssicke 8 anschließende Blechabschnitt erstreckt sich dann bis zu einer wiederum nach außen gerichteten Abwinkelung 9, an der der entsprechende Befestigungslappen 5 an den Deformationsbereich 4 angrenzt.

In dem dargestellten Ausführungsbeispiel sind dabei der Blechabschnitt zwischen der ersten und zweiten Längssicke 6 bzw. 7 und der Blechabschnitt zwischen der dritten Längssicke 8 und der Abwinkelung 9 eines Befestigungslappens 5 im wesentlichen parallel zueinander angeordnet. Des weiteren sind diese Blechabschnitte in bezug auf die Fahrzeugkarosserie gegenüber einer Vertikalen derart geneigt, daß die Profilweite des Seitenbleches 1 zwischen dem Verkleidungsabschnitt 2 und dem Befestigungsabschnitt 4 von der Außenkante 3 ausgehend betrachtet, d. h. hier nach unten zunimmt.

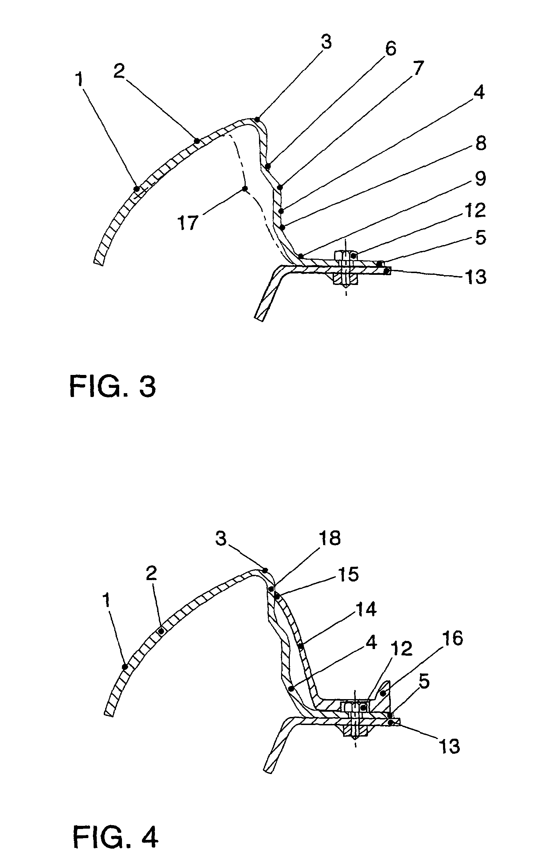

Wie insbesondere aus Figur 2 zu erkennen ist, sind zwischen benachbarten Befestigungslappen 5 Ausnehmungen 10 ausgebildet, die sich jeweils bis in den Deformationsbereich 4 erstrecken und die Längssicken 6, 7, 8 unterbrechen. Die Ausnehmungen 10 sind dabei bogenförmig ausgebildet, wobei sich der Scheitel 11 des Bogens jeweils bis kurz oberhalb der ersten Längssicke 6, d. h. derjenigen Längssicke, die der Außenkante 3 am nächsten liegt, erstreckt. Durch die Unterbrechung sämtlicher Längssicken 6, 7, 8 ergibt sich für die Deformationsbereiche 4 ein großes Verformungsvermögen, so daß bei einem Aufprall einer Person auf die Außenkante 3 das Seitenblech 1 nach außen ausweichen kann, wodurch die Verletzungsgefahr bzw. die Schwere einer Verletzung der Person vermindert werden kann. Das Ausweichverhalten ist in Figur 3 anhand der Phantomlinie 17 dargestellt, die die Lage einer Innenwand eines Deformationsbereiches 4 bei einem Aufprall repräsentiert. Aus Figur 3 ist insbesondere zu erkennen, daß das Verformungsvermögen des Deformationsbereiches 4 durch den Trägerabschnitt 13 der Karosserie nicht beeinträchtigt wird.

Da der erste Blechabschnitt 18 zwischen der Außenkante 3 und der ersten Längssicke 6 von der Ausnehmung 10 nur geringfügig angeschnitten wird, bleibt die Außenkante 3 ausreichend steif, um zu verhindern, daß diese bei einer im wesentlichen statischen Belastung, beispielsweise dann, wenn sich eine Person gegen das Seitenblech 1 lehnt oder auf dieses setzt, nicht dauerhaft verformt wird. Durch die bogenförmige Ausbildung der Ausnehmung 10 werden in einem solchen Fall Spannungsspitzen, die ein Einknicken verursachen könnten, vermieden.

An dem Befestigungsabschnitt des Seitenbleches 1 ist weiterhin eine Abdeckleiste 14 vorgesehen, die an den Befestigungslappen 5 festgelegt ist und die Ausnehmungen 10 abdeckt. Die Abdeckleiste 14 kann beispielsweise als Wasserablaufrinne ausgebildet werden. Wie aus Figur 4 zu erkennen ist, umfaßt die Abdeckleiste 14 hierzu einen die Befestigungslappen 5 sowie die zugehörigen Befestigungsmittel 12 abdeckenden Sockelabschnitt 16, von dem sich ein elastischer Flanschabschnitt geradlinig in Richtung der Außenkante 3 erstreckt. Der Flanschabschnitt ist an seinem Ende mit einer durchgehenden Dichtlippe 15 versehen, die gegen den ersten Blechabschnitt 18 oberhalb der Scheitel 11 der Ausnehmungen 10 in Längsrichtung der Außenkante 3 dichtend anliegt und gegen diesen aufgrund der Elastizität des Flanschabschnittes mit Druck vorgespannt ist. Die Abdeckleiste 14 wird bevorzugt aus Kunststoff hergestellt.

### BEZUGSZEICHENLISTE

- 1: Seitenblech
- 2: Verkleidungsabschnitt
- 3: Außenkante
- 4: Deformationsbereich
- 5: Befestigungslappen
- 6: erste Längssicke
- 7: zweite Längssicke
- 8: dritte Längssicke
- 9: Abwinkelung
- 10: Ausnehmung
- 11: Scheitel der Ausnehmung
- 12: Befestigungsbolzen
- 13: Trägerabschnitt der Karosserie
- 14: Abdeckleiste
- 15: Dichtlippe der Abdeckleiste
- 16: Sockelabschnitt der Abdeckleiste
- 17: Phantomlinie der Innenwand des Deformationsbereiches
- 18: erster Blechabschnitt

## Patentansprüche

1. Fahrzeugseitenblech mit aufprallweicher Außenkante, umfassend einen außenliegenden Verkleidungsabschnitt (2) für eine Fahrzeugkarosserie und einen entlang einer Außenkante (3) an diesen angeformten, nach innen umgebogenen Befestigungsabschnitt, der einen an die Außenkante (3) unmittelbar anschließenden Deformationsbereich (4) mit zwei im wesentlichen parallel zu der Außenkante (3) verlaufenden, entgegengesetzt zueinander gebogenen Längssicken (6, 7) aufweist, sowie mehrere, gegenüber dem Deformationsbereich (4) abgewinkelte Befestigungslappen (5) zur Ankopplung des Seitenbleches (1) an die Fahrzeugkarosserie, **dadurch gekennzeichnet, daß** zwischen den Befestigungslappen (5) gebildete Ausnehmungen (10) sich jeweils bis in den Deformationsbereich (4) erstrecken und die Längssicken (6, 7) unterbrechen.

2. Fahrzeugseitenblech nach Anspruch 1, **dadurch gekennzeichnet, daß** jeder Befestigungslappen (5) als sich in bezug auf die Fahrzeugkarosserie im wesentlichen horizontal erstreckender, flacher Blechabschnitt zur Anlage gegen die Fahrzeugkarosserie ausgebildet ist, der an den Deformationsbereich (4) anschließt.

3. Fahrzeugseitenblech nach Anspruch 1 oder 2, **dadurch gekennzeichnet, daß** der Deformationsbereich (4) weiterhin eine dritte Längssicke (8) umfaßt, die zwischen den Befestigungslappen (5) einerseits und den ersten beiden Längssicken (6, 7) andererseits angeordnet ist.

4. Fahrzeugseitenblech nach Anspruch 3, **dadurch gekennzeichnet, daß** die dritte Längssicke (8) entsprechend der ersten, der Außenkante (3) am nächsten liegenden Längssicke (6), gebogen ist.

5. Fahrzeugseitenblech nach einem der Ansprüche 1 bis 4, **dadurch gekennzeichnet, daß** ein Blechabschnitt zwischen der ersten und der zweiten Längssicke (6, 7) und ein Blechabschnitt zwischen der dritten Längssicke (8) und der Abwinkelung (9) eines Befestigungslappens (5) im wesentlichen parallel zueinander angeordnet sind und in bezug auf die Fahrzeugkarosserie gegenüber einer Vertikalen derart geneigt sind, daß die Profilweite des Seitenbleches (1) zwischen dem Verkleidungsabschnitt (2) und dem Befestigungsabschnitt von der Außenkante (3) ausgehend betrachtet zunimmt.

6. Fahrzeugseitenblech nach einem der Ansprüche 1 bis 5, **dadurch gekennzeichnet, daß** die Ausnehmungen (10) bogenförmig ausgebildet sind, wobei sich die Scheitel (11) der bogenförmigen Ausnehmungen (10) um bis kurz oberhalb derjenigen Längssicke (6) erstrecken, welche der Außenkante (3) am nächsten liegt.

7. Fahrzeugseitenblech nach einem der Ansprüche 1 bis 6, **dadurch gekennzeichnet, daß** entlang des Befestigungsabschnittes eine Abdeckleiste (14) vorgesehen ist, welche an den Befestigungslappen (5) festgelegt ist und die Ausnehmungen (10) abdeckt.

8. Fahrzeugseitenblech nach Anspruch 7, **dadurch gekennzeichnet, daß** die Abdeckleiste (14) eine Dichtlippe (15) aufweist, die oberhalb der Scheitel (11) der Ausnehmungen (10) elastisch gegen den Blechabschnitt (18) zwischen der Außenkante (3) und der ersten Längssicke (6) anliegt.

9. Kraftfahrzeug, dessen vordere Kotflügel jeweils durch ein Fahrzeugseitenblech (1) nach einem der Ansprüche 1 bis 8 gebildet sind.

## Claims

1. Vehicle lateral steel sheet with an outer edge deformable under impact, comprising an outer panelling section (2) for a vehicle body and a fastening section which is integrally formed on this panelling section along an outer edge (3), is bent over inwards and has a deformation region (4), which is directly adjacent to the outer edge (3) and has two longitudinal beads (6, 7) which run essentially parallel to the outer edge (3) and are bent in opposite directions to each other, and also comprising a plurality of fastening tabs (5), which are angled in relation to the deformation region (4), for coupling the lateral steel sheet (1) to the vehicle body, **characterized in that** recesses (10) formed between the fastening tabs (5) extend in each case into the deformation region (4) and interrupt the longitudinal beads (6, 7).

2. Vehicle lateral steel sheet according to Claim 1, **characterized in that** each fastening tab (5) is designed as a flat steel sheet section which extends essentially horizontally with respect to the vehicle body, is intended for bearing against the vehicle body and adjoins the deformation region (4).

3. Vehicle lateral steel sheet according to Claim 1 or 2, **characterized in that** the deformation region (4) furthermore comprises a third longitudinal bead (8) which is arranged between the fastening tabs (5), on the one hand, and the first two longitudinal beads (6, 7), on the other hand.

4. Vehicle lateral steel sheet according to Claim 3, **characterized in that** the third longitudinal bead (8) is curved corresponding to the first longitudinal bead (6) which is situated closest to the outer edge (3).

5. Vehicle lateral steel sheet according to one of Claims 1 to 4, **characterized in that** a steel sheet section between the first and the second longitudinal beads (6, 7) and a steel sheet section between the third longitudinal bead (8) and the angled portion (9) of a fastening tab (5) are arranged essentially parallel to each other and are inclined with respect to the vehicle body in relation to a vertical in such a manner that the profile width of the lateral steel sheet (1) between the panelling section (2) and the fastening section increases, viewed starting from the outer edge (3).

6. Vehicle lateral steel sheet according to one of Claims 1 to 5, **characterized in that** the recesses (10) are of arcuate design, with the apexes (11) of the arcuate recesses (10) extending to shortly above that longitudinal bead (6) which is situated closest to the outer edge (3).

7. Vehicle lateral steel sheet according to one of Claims 1 to 6, **characterized in that** a covering strip (14) which is fixed to the fastening tabs (5) and covers the recesses (10) is provided along the fastening section.

8. Vehicle lateral steel sheet according to Claim 7, **characterized in that** the covering strip (14) has a sealing lip (15) which, above the apexes (11) of the recesses (10), bears elastically against the steel sheet section (18) between the outer edge (3) and the first longitudinal bead (6).

9. Motor vehicle, the front wings of which are formed in each case by a vehicle lateral steel sheet (1) according to one of Claims 1 to 8.

## Revendications

1. Tôle latérale de véhicule à bord externe déformable en cas d'impact comprenant une partie d'habillage (2) disposée à l'extérieur pour une carrosserie de véhicule et, moulée sur cette dernière, une partie de fixation recourbée vers l'intérieur le long d'un bord extérieur (3) et présentant une zone de déformation (4) suivant immédiatement au bord extérieur (3) et comportant deux moulures longitudinales (6, 7) s'étendant pour l'essentiel parallèlement au bord extérieur (3) et courbées en opposition l'une vers l'autre, ainsi que plusieurs langues de fixation (5) incurvées en face de la zone de déformation (4) permettant le couplage de la tôle latérale (1) sur la carrosserie de véhicule, **caractérisée en ce que** des évidements (10) formés entre les langues de fixation (5) s'étendent chacun jusque dans la zone de déformation (4) en interrompant les moulures longitudinales (6,7).

2. Tôle latérale de véhicule selon la revendication 1, **caractérisée en ce que** chaque langue de fixation (5) est formée comme partie de tôle plane s'étendant par rapport à la carrosserie de véhicule pour l'essentiel horizontalement jusqu'à l'appui sur la carrosserie de véhicule à la suite de la zone de déformation (4).

3. Tôle latérale de véhicule selon l'une des revendications 1 ou 2, **caractérisée en ce que** la zone de déformation (4) comprend en outre une troisième moulure longitudinale (8) disposée entre les langues de fixation (5) d'un côté et les deux premières moulures longitudinales (6, 7) d'un autre côté.

4. Tôle latérale de véhicule selon la revendication 3, **caractérisée en ce que** la troisième moulure longitudinale (8) est incurvée selon la première moulure longitudinale (6) la plus proche du bord extérieur (3).

5. Tôle latérale de véhicule selon l'une des revendications 1 à 4, **caractérisée en ce qu'**une partie de tôle entre la première et la deuxième moulure longitudinale (6, 7) et une partie de tôle entre la troisième moulure longitudinale (8) et l'incurvation (9) d'une langue de fixation (5) sont pour l'essentiel parallèles l'une à l'autre et inclinées par rapport à la carrosserie de véhicule par rapport à une verticale de sorte que la largeur de profil de la tôle latérale (1) entre la partie d'habillage (2) et la partie de fixation va en augmentant lorsqu'on l'observe depuis le bord extérieur (3).

6. Tôle latérale de véhicule selon l'une des revendications 1 à 5, **caractérisée en ce que** les évidements (10) sont formés en arcs, les sommets (11) des évidements incurvés (10) s'étendant jusqu'à peu au-dessus de la moulure longitudinale (6) la plus proche du bord extérieur (3).

7. Tôle latérale de véhicule selon l'une des revendications 1 à 6, **caractérisée en ce que** le long de la partie de fixation une baguette de recouvrement (14) est prévue, solidement appliquée contre les langues de fixation (5) et recouvrant les évidements (10).

8. Tôle latérale de véhicule selon la revendication 7, **caractérisée en ce que** la baguette de recouvrement (14) présente une lèvre d'étanchéité (15) appliquée élastiquement au-dessus des sommets (11) des évidements (10) contre la partie en tôle (18) entre le bord extérieur (3) et la première moulure longitudinale (6).

9. Véhicule dont les garde-boue avant sont chacun formés d'une tôle latérale de véhicule (1) selon l'une des revendications 1 à 8.
